(19) **Europäisches Patentamt**
**European Patent Office**
**Office européen des brevets**

(11) **EP 4 482 019 A1**

(12) **EUROPEAN PATENT APPLICATION**

(43) Date of publication:
**25.12.2024 Bulletin 2024/52**

(21) Application number: **23382608.0**

(22) Date of filing: **19.06.2023**

(51) International Patent Classification (IPC):
*H02P 6/18* (2016.01)     *H02M 1/00* (2006.01)

(52) Cooperative Patent Classification (CPC):
**H02P 6/18; H02M 1/0009; H02M 1/08; H02M 1/327;**
**H02M 7/48;** H02P 2203/09

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **E.G.O. Elektro-Gerätebau GmbH**
**75038 Oberderdingen (DE)**

(72) Inventors:
• **Torres, Toni**
  **08185 Llicà de Vall (ES)**

• **Camps, Jordi**
  **08185 Llicà de Vall (ES)**
• **Sala, Perez**
  **17130 L'Escala (ES)**
• **Villegas, Alvar**
  **08185 Llicà de Vall (ES)**
• **Sanchez, Gerard**
  **08185 Llicà de Vall (ES)**
• **Schaumann, Uwe**
  **75038 Oberderdingen (DE)**

(74) Representative: **Patentanwälte**
**Ruff, Wilhelm, Beier, Dauster & Partner mbB**
**Kronenstraße 30**
**70174 Stuttgart (DE)**

(54) **METHOD AND DEVICE FOR DRIVING A THREE-PHASE MOTOR WITH THREE-PHASE CURRENT**

(57)     A method for driving a three-phase BLDC motor with three-phase current supplies the motor with power by means of a power supply with the current. The power supply has semiconductor power control means being arranged in half-bridge configuration, and the motor control is connected to the power supply to perform the following steps. The current flowing is measured directly for each phase with respect to the positive waves from the current, and then the angle of rotation of the motor is determined. It is determined which of six equal rotation angle sectors with 60° each is present at current. Then the current of each phase is determined for each of the six rotation angle sectors, wherein the current I_phase of each phase is partly determined for at least one sector from a measured value for one of the phases alone, is partly determined for at least one sector from two measured values for two of the phases by subtraction and/or addition, and is partly determined for at least one sector by a trigonometrical function.

Fig.3

EP 4 482 019 A1

**Description**

TECHNICAL FIELD AND PRIOR ART

The invention is directed to a method for driving a three-phase motor with three-phase current as well as to a device with a motor control, which motor control is designed to operate according to this method.

It is known to drive electro motors, in particular three-phase motors, with varying electric power by a motor control in full-bridge or in half-bridge configuration. A half-bridge configuration is preferred due to the need for less components, in particular less costly semiconductor power control means such as power MOSFETs or the like.

SUMMARY OF THE INVENTION

It is the object of the invention to provide a method for driving a three-phase motor with three-phase current as well as a device with a motor control with which problems in the prior art can be overcome, while at the same time the number of components needed is reduced as well as the power consumption is less.

This object is solved by a method for driving a three-phase motor with three-phase current with the features of claim 1 and a device with a motor control, which motor control is designed to operate according to this method, having the features of claim 7. Such a device can be integrated into a domestic appliance such as a washing machine or a laundry dryer. Advantageous and preferred configurations of the invention are the subject of the further claims and are explained in more detail below. Some of the features may be described only with regard to the method or only with regard to the device. However, regardless of this, they are intended to be able to apply by themselves for the method for driving a three-phase motor and for corresponding device independently of one another. The wording of the claims is made to the content of the description by means of express references.

The method for driving a three-phase motor with three-phase current according to the invention provides for the three-phase motor to be supplied with power by means of a power supply with three-phase current. The power supply has semiconductor power control means, in particular semiconductors such as FET or IGBT, being arranged in half-bridge configuration. A motor control is connected to the power supply, wherein the motor control can preferably be integrated into a control or a central appliance control, respectively, of a domestic appliance in which the motor is integrated. Alternatively, the motor control can be a separate control and component in the appliance, where the motor control is controlled by the central appliance control.

For the method of the invention, the motor control performs the following steps. At first, the three-phase current flowing through the three-phase motor is measured directly for each of the three phases with respect to the positive waves from the semiconductor power control means. An angle of rotation of the three-phase motor is then determined, which may be done via external sensors on the motor, preferably at the stator and/or the rotor, in particular Hall sensors, or via calculation. Calculation methods for this are known in the art.

It is then determined which of six equal rotation angle sectors with 60° each is present at the three-phase motor or at the three-phase current. Such a division into six rotation angle sectors with 60° each is not absolutely necessary, it could also be three sectors, but it is preferred and advantageous. Then the course of the current I_phase of each phase of the three-phase current is determined for each of the six rotation angle sectors, wherein the current I_phase of each phase is determined not in the same way for all the sectors. The current I_phase is partly determined for at least one sector, preferably for two sectors, from a measured value for one of the phases alone, in particular one current I_phase is determined to be exactly the measured value of this specific current I_phase. In particular, per sector exactly one phase or exactly two phases of the three phases are determined to be exactly the measured value of the specific current I_phase.

The current I_phase is partly determined for at least one sector from two measured values for two of the phases by subtraction and/or addition, preferably by subtraction and/or addition of the two measured values for the other two of the three phases. Even more preferably, the two measured values for the other two of the phases are added and then this is inverted. This is advantageously made for exactly one phase of the three phases per sector, but in every sector.

The current I_phase is then also partly determined for at least one sector by a trigonometrical function such as a sinus function or a cosinus function, preferably for three out of six sectors, even more preferably for the second, the fourth and the sixth sector. This trigonometrical function may be applied directly to the angle of rotation at present, or to this angle plus 120° or minus 120°.

After some of the current phases for each sector have been determined by measurement, and the others have been determined by calculating, all the current phases for all the sectors are at hand. It is then possible to put together the complete course of all the three phases for all the six sectors, which can then be used to drive the motor in a manner wanted. Shunt resistors or the like as are necessary in the art are not needed, thus saving effort, energy and space.

In a preferred embodiment of one alternative of the invention, the current I_phase of each phase of the three-phase current is determined for each of the six rotation angle sectors of 60° as follows:

1. rotation angle sector:

I_phase 1 = I_phase 1(measured)
I_phase 2 = - I_phase 1(measured) - I_phase 3(measured)
I_phase 3 = I_phase 3(measured)

2. rotation angle sector:

I_phase 1 = I_phase 1(measured)
I_phase 2 = I_phase 1(measured) * sin(angle of rotation - 120°)
I_phase 3 = - I_phase 1(measured) - I_phase 2(measured)

3. rotation angle sector:

I_phase 1 = I_phase 1(measured)
I_phase 2 = I_phase 2(measured)
I_phase 3 = - I_phase 1(measured) - I_phase 2(measured)

4. rotation angle sector:

I_phase 1 = - I_phase 3(measured) - I_phase2(measured)
I_phase 2 = I_phase 2(measured)
I_phase 3 = I_phase 2(measured) * sin(angle of rotation + 120°)

5. rotation angle sector:

I_phase 1 = - I_phase 2(measured) - I_phase 3(measured)
I_phase 2 = I_phase 2(measured)
I_phase 3 = I_phase 3(measured)

6. rotation angle sector:

I_phase 1 = I_phase 3(measured) * sin(angle of rotation)
I_phase 2 = - I_phase 1(measured) - I_phase 3(measured)
I_phase 3 = I_phase 3(measured)

This shows that for the first, the third and the fifth sector, two phases are directly measured and the respective third phase is determined by addition of the other two, which is then inverted. For the second, the fourth and the sixth sector, only one phase is directly measured. One phase is again determined by addition of the other two phases, which is then inverted. And one phase is determined by a sinus function.

Alternatively, instead of a sinus function, also a cosinus function could be used, for example if only one phase $IPH_1$ is known, the second and the third phase could be calculated based on the trigonometric relationship as

$$IPH_2 = IPH_1 * \cos(\theta_{\alpha\beta} - 120) / \cos(\theta_{\alpha\beta})$$

$$IPH_3 = IPH_1 * \cos(\theta_{\alpha\beta} + 120) / \cos(\theta_{\alpha\beta})$$

Alternatively, three current phases Iu, Iv and Iw could be calculated for the six sectors as:

| 2 | cosinus=cos(Angle) | Iu=Iu<br>Iv=Iu*cos(Angle-2*PI/3)/cosinus<br>Iw=-Iu-Iv |

| 4 | cosinus=cos(Angle-2PI/3) | Iv=Iv<br>Iw=Iv*cos(Angle+2*PI/3)/cosinus<br>Iw=-Iu-Iv |

| 3 | | Iw=-Iu-Iv<br>Iu=Iu<br>Iv=Iv |

| 6 | cosinus=cos(Angle+2PI/3) | Iw=Iw<br>Iw=Iv*cos(Angle)/cos(Angle)<br>Iw=-Iu-Iv |

| 1 | | Iv=-Iu-Iw<br>Iu=Iu<br>Iw=Iw |

| 5 | | Iu=-Iv-Iw<br>Iv=Iv<br>Iw=Iw |

In an advantageous embodiment of the invention, the semiconductor power control means are implemented in silicon technology. Alternatively, they can be implemented in silicon carbide technology. In a further alternative, they can be implemented in GaN technology, which is quite new and very promising with regard to efficiency.

The semiconductor power control means can preferably be FET's, even more preferably FREDFET's.

The method and the respective device are preferably implemented to operate a household device with a three-phase motor with controlling this three-phase motor, wherein in particular the household device is a washing machine, a dryer or a dish-washer.

The device for driving a three-phase motor with three-phase current according to the method described before has a power supply with semiconductor power control means being arranged in half-bridge configuration or in bridge configuration with semiconductor power control means. The semiconductor power control means are implemented in silicon technology, in silicon carbide technology or in GaN technology as mentioned above. The device has a motor control being connected to the power supply, wherein the motor control is designed to drive the three-phase motor with a method described above by the power supply. The motor control preferably is a microcontroller or integrated into a microcontroller, for example one of a central appliance control. In a preferred embodiment, the power supply is designed to be a three-phase inverter.

The device or the power supply or the motor control, respectively, is preferably designed to be without shunt resistors für detecting a current flowing through the three-phase motor, which shunt resistor may be necessary for each phase. Such shunt resistors cause major problems and have a relatively high energy consumption, which energy is turned into heat, which again needs to be dissipated. This again causes problems. The measured current phases are measured via a small resistor of the device, and the resulting signal can be directly used in a microcontroller for digitization. In some instances, also an operational amplifier is needed for current measurement with a shunt resistor in the prior art, so also this component can be dispensed of.

The three-phase motor may be a BLDC motor, which can preferably be operated with a field-oriented control. Alternatively, the three-phase motor may be a multi-phase PM motor.

The device may incorporate two high-voltage N-channel power FREDFETs with low and high-side drivers in a single small-outline package. The internal power FREDFETs offer ultra-soft and ultrafast diodes ideally suited for hard switched inverter drives. Both low and high-side drivers may be self-supplied, which eliminates the need for an external auxiliary power supply for them.

The device according to the invention may provide a unique instantaneous phase current output signal simplifying implementation of a sensor-less control scheme. Also, it offers internal fault protection functions and external system level monitoring. Internal fault protection may include cycle-by-cycle current limiting for both FREDFET's, and two-level thermal overload protection. External system level monitoring may include DC bus sensing with four undervoltage levels and one overvoltage level as well as driving external sensors such as an NTC. This may be used to sense a temperature, for example in the device itself, alternatively in the motor.

These and further features are evident not only from the claims but also from the description and the drawings, the individual features each being implemented by themselves or in multiples in the form of subcombinations for an embodiment of the invention and in different fields and being able to be advantageous and independent protectable embodiments for which protection is claimed here. The division of the application into individual sections and subheadings does not limit the general validity of the statements made thereunder.

BRIEF DESCRIPTION OF THE DRAWINGS

In the following, embodiments of the invention will be described in detail with reference to the drawings. Throughout the drawings, the same elements will be denoted by the same reference numerals.

Fig. 1      current readings of a three-phase current from a half bridge,

Fig. 2      normal current readings of a three-phase current,

Fig. 3      a switch device according to the invention with an integrated phase current output signal $V_{IPH}$ over a small signal resistor $R_{IPH}$ for digitization by a microcontroller,

Fig. 4      a half bridge reconstruction of the current based on Fig. 2 with the negative current signals generated by reconstruction of the positive signals of the other two current phases, with a division in six sectors S1 to S6 of 60° each,

Fig. 5      the reconstructed signals for three of the six sectors with 90° and 120° shifting, retrieved by calculation,

Fig. 6      the calculated half bridge signals corresponding to the theoretical diagram of Fig. 4,

Fig. 7      a current reconstruction for the three current phases by combining Figs. 5 and 6,

Fig. 8      an algorithm flowchart for the calculation used,

Fig. 9      a current angle estimation concept used,

Fig. 10      a current angle estimation algorithm according to the concept of Fig. 9,

Fig. 11      a schematic circuit used for the invention.

**Detailed description of the embodiments**

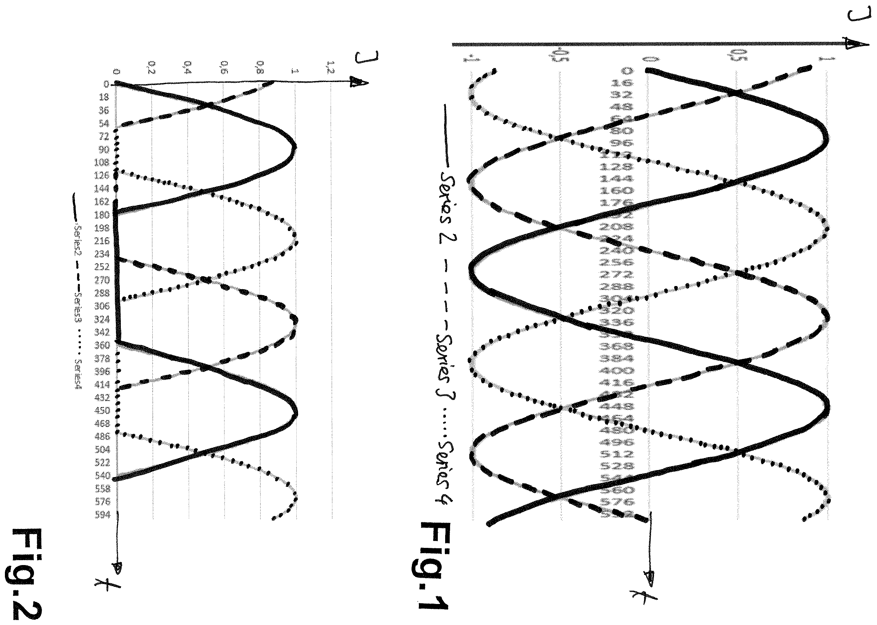

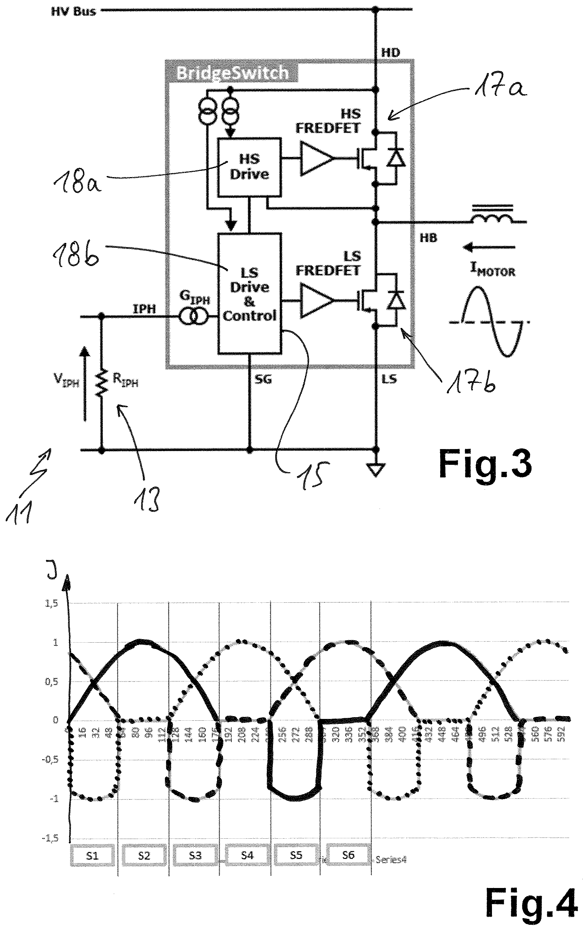

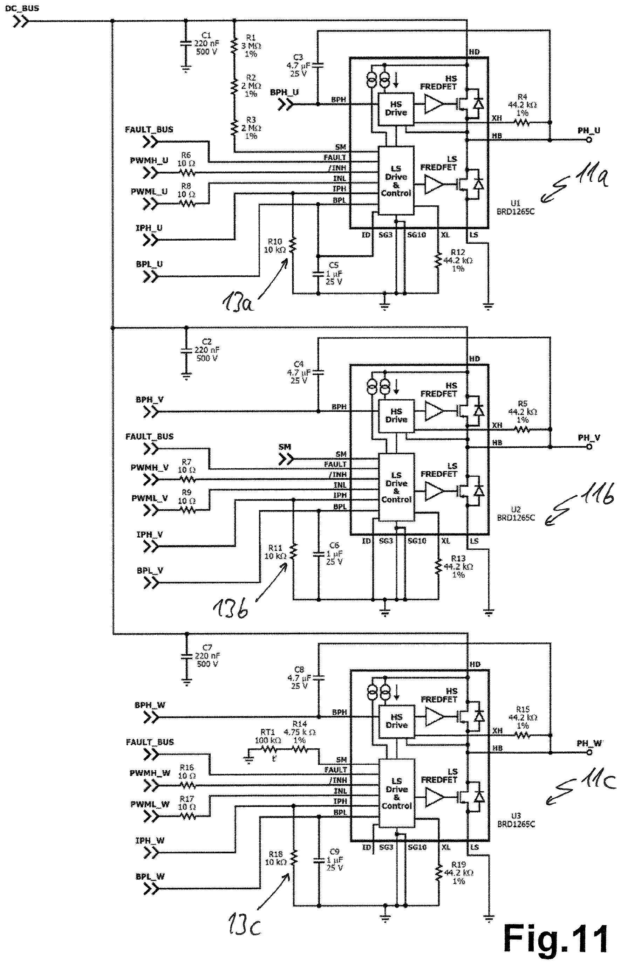

Fig. 1 shows a normal current signal of a three-phase current, for example in a household. Such a three-phase current may be used, as has been explained before, to drive a multi-phase PM or, preferably, a BLDC motor. Such a motor can preferably be implemented in a domestic appliance such as a drive motor for a laundry drier or a washing machine, alternatively for a motor driving a pump, which may also be used in a washing machine or in a dishwasher. The invention allows for a better control of such motors with an easier generation of the current signals without any need for conventional shunt resistors, which shunt resistors basically have a negative enlarged electrical resistance leading to energy loss and unnecessary heat generation. A circuit with which this three-phase current may be operated and used for controlling and driving such a three-phase motor can be taken from Fig. 3 for a single switch device and Fig. 11 for a schematic circuit for the three-phase current.

Fig. 2 shows only the positive signals of the three-phase current of Fig. 1. These positive signals can be generated from the device of Fig. 3, where the current is measured in relation to the voltage $V_{IPH}$ over the resistor $R_{IPH}$. This resistor is designed as a small signal resistor, and the generated voltage signal may be used for digitization by a microcontroller of the control, which may be the microcontroller 15. A conventional shunt resistor is thus not needed, and the energy loss generated in the small signal resistor 13 is insignificant. The only major disadvantage is, as explained before, that only the positive signals can be generated at the resistor $R_{IPH}$ and used by the microcontroller 15. A field-oriented control FOC for any such three-phase motors mentioned above but needs of course the positive signals and the negative signals or, respectively, the complete current reading according to Fig. 1.

The special power semiconductors 17a and 17b for the high side and the low side may be high voltage N-channel power FREDFETs with the respective high side drivers 18a and 18b, wherein the low side driver is integrated into the microcontroller 15. These semiconductors 17a and 17b offer ultra-soft and ultra-fast diodes being ideally suited for hard switched inverter drivers, such as for three-phase motors. Both semiconductors 17a and 17b are self-supplied, thus eliminating the need for an external auxiliary power supply. They could be implemented in GaN-technology, alternatively in silicon technology or silicon carbide technology, respectively. Such GaN semiconductors provide a unique and instantaneous phase current output signal, which simplifies an implementation of a sensor-less control for a three-phase motor. It also offers internal fault protection functions and external system level monitoring. Such an internal fault protection may include cycle-by-cycle current limiting for both power semiconductors 17a and 17b and also two-level thermal overload protection. An external system level monitoring may include a DC bus sensing means with four undervoltage levels and one overvoltage level. It may also include the option to drive external sensors such as an NTC temperature sensor for sensing high temperature at the switch device 11 or at a three-phase motor, respectively.

Fig. 4 shows, with a division into six sectors each having the same size of 60°, how a part of the negative part of each phase may be generated, which is by adding the two positive parts of the other two phases and inverting it. However, this may be applied for the sectors S1, S2 and S3, which can thus be generated simply and exclusively from the measured current phases. For calculating the unknown current phases in the sectors S2, S4 and S6, the calculation according to the following formula is needed with using the sinus applied to the first phase in sector S2, applied to the second phase in sector S4 and applied to the third phase in sector S6.

2 → $cosinus=cos(Angle)$ →
$$Iu=Iu$$
$$Iv=Iu*cos(Angle-2*PI/3)/cosinus$$
$$Iw=-Iu-Iv$$

4 → $cosinus=cos(Angle-2PI/3)$ →
$$Iv=Iv$$
$$Iw=Iv*cos(Angle+2*PI/3)/cosinus$$
$$Iw=-Iu-Iv$$

3 →
$$Iw=-Iu-Iv$$
$$Iu=Iu$$
$$Iv=Iv$$

6 → $cosinus=cos(Angle+2PI/3)$ →
$$Iw=Iw$$
$$Iw=Iv*cos(Angle)/cos(Angle)$$
$$Iw=-Iu-Iv$$

1 →
$$Iv=-Iu-Iw$$
$$Iu=Iu$$
$$Iw=Iw$$

5 →
$$Iu=-Iv-Iw$$
$$Iv=Iv$$
$$Iw=Iw$$

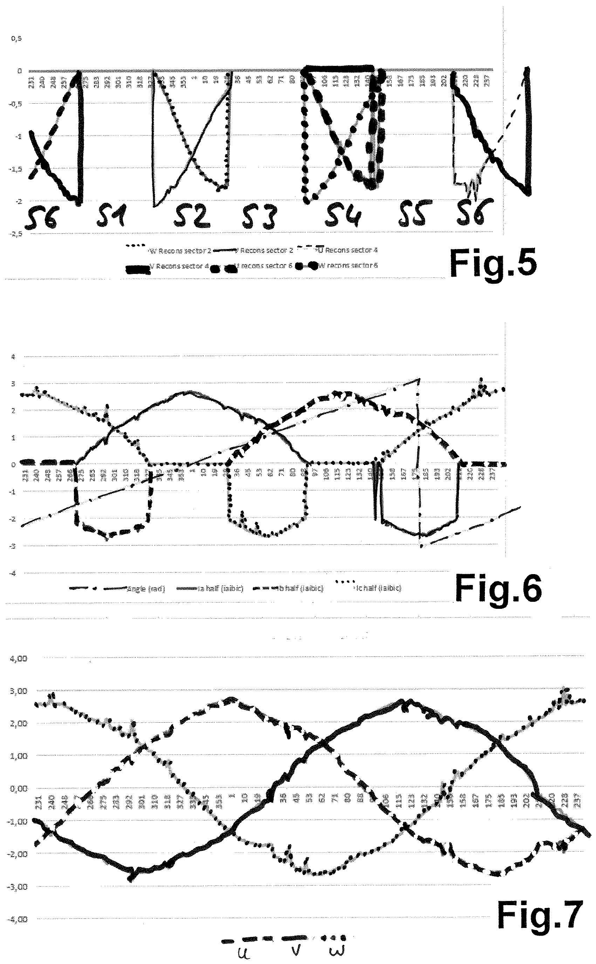

This leads to the calculated current signals shown in Fig. 5 for the sectors S2, S4 and S6. For example, for sector S2, the reconstructed first phase corresponding to "series 2" is shown in a thin continuous line. The signal for the third phase "series 4" is shown in thin dotted line. In sector S4, the third phase "series 4" is shown in fat dotted line. Also the second current phase "series 3" is shown in fat dashed line.

In sector S6, the third current phase "series 3" is shown in thin dashed line, wherein the first current phase "series 2" is shown in fat continuous line.

Fig. 6 now shows the measured positive current signals for the three current phases. It also shows, according to Fig. 4, the measured and inverted negative parts. In addition, the angle according to which the sectors are divided is shown in dash-dotted line showing a rising ramp with a fall, and then rising again.

Fig. 7 shows the combination of the current phase signals of Figs. 5 and 6, where the complete current signals for all three current phases have been reconstructed, which give a picture similar to the one of Fig. 1.

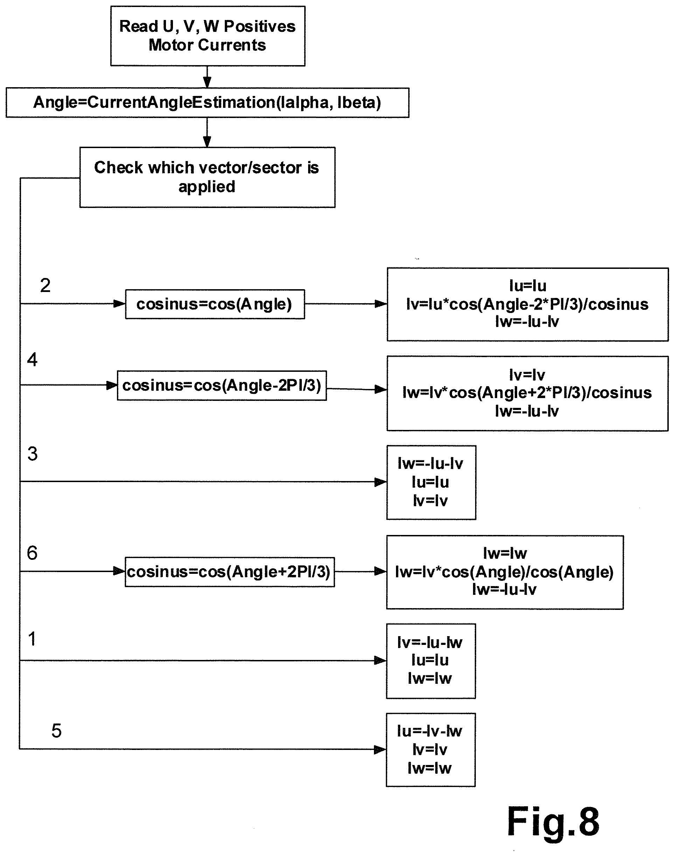

Fig. 8 shows a flowchart for the algorithm for the method described before, but with a slight variation of how the calculation for some of the sectors S of Fig. 5 is done. As in the formula described above, the calculation needs to be done for the sectors S2, S4 and S6. Instead of a calculation with the sinus of an angle of rotation, which may be corrected for 120°, the corresponding cosinus calculation is made together with a division. From a mathematical point of view, both calculations are equal.

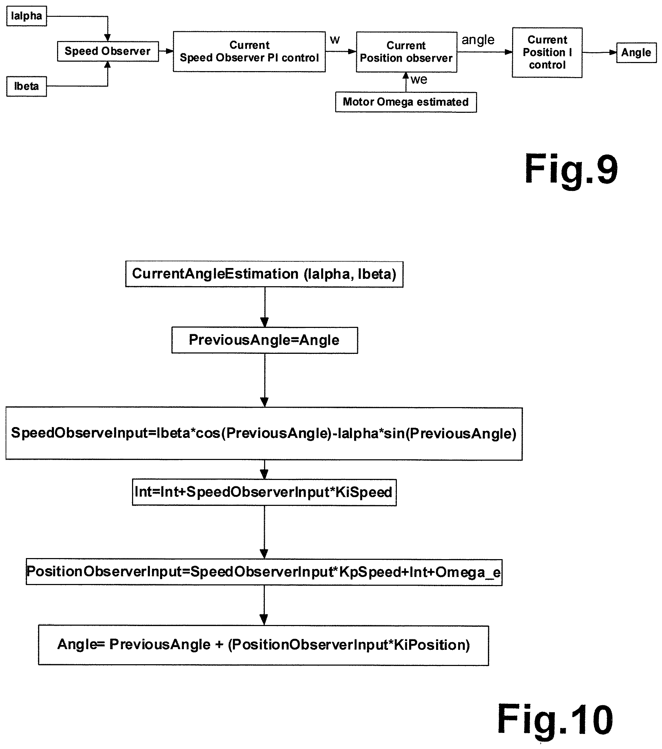

This calculation of Fig. 8 follows a current angle estimation which is explained in connection with Figs. 9 and 10. Fig. 9 is the basic concept, and Fig. 10 is the actual algorithm. There are two inputs for the speed of server of the motor, which are Ialpha and Ibeta. This gives the offset between the stator and the rotor angles of the motor. Then the control applies a PI speed observer to retrieve an offset speed w. The value Motor Omega we is estimated and gives the current feedback signal speed. This current feedback signal speed is used to get the real current angle. Finally, the real current speed (we) is used as well as the offset speed got on the PI speed, which is used to calculate the angle of the next current feedback loop.

Fig. 11 shows one option using the circuit of Fig. 3 to form a circuit for a three-phase current control. A supervising control in the form of a separate microcontroller might be present to control the three switching devices 11a, 11b and 11c. Six semiconductor power components are needed. The resistors 13a, 13b and 13c are used to measure a voltage signal by conversion of an IPH current through the resistors into a voltage signal, which is then digitized and used by the low side controls. This circuit of Fig. 11 is used to calculate the current signals of Fig. 7. Any of the trigonometric calculation methods described above can be used to calculate the current signals of Fig. 7.

## Claims

1. Method for driving a three-phase motor with three-phase current, wherein:

   - the three-phase motor is supplied with power by means of a power supply with three-phase current,
   - the power supply has semiconductor power control means being arranged in half-bridge configuration,
   - a motor control is connected to the power supply,

   wherein the motor control performs the following steps:

   - the current flowing through the three-phase motor is measured directly for each phase with respect to the positive waves from the semiconductor power control means,
   - the angle of rotation of the three-phase motor is then determined,
   - it is determined or checked which of six equal rotation angle sectors with 60° each is present at the three-phase motor or at the three-phase current,
   - the current I_phase of each phase of the three-phase current is determined for each of the six rotation angle sectors, wherein the current I_phase of each phase is:

     ◦ partly determined for at least one sector from a measured value for one of the phases alone,
     ◦ partly determined for at least one sector from two measured values for two of the phases by subtraction and/or addition,
     ◦ partly determined for at least one sector by a trigonometrical function.

2. Method according to claim 1, **characterized in that** the current I_phase of each phase of the three-phase current is determined for each of the six rotation angle sectors as:

   1. rotation angle sector:

      I_phase 1 = I_phase 1(measured)
      I_phase 2 = - I_phase 1(measured) - I_phase 3(measured)
      I_phase 3 = I_phase 3(measured)

   2. rotation angle sector:

      I_phase 1 = I_phase 1(measured)
      I_phase 2 = I_phase 1(measured) * sin(angle of rotation - 120°)
      I_phase 3 = - I_phase 1(measured) - I_phase 2(measured)

3. rotation angle sector:

I_phase 1 = I_phase 1(measured)
I_phase 2 = I_phase 2(measured)
I_phase 3 = - I_phase 1(measured) - I_phase 2(measured)

4. rotation angle sector:

I_phase 1 = - I_phase 3(measured) - I_phase2(measured)
I_phase 2 = I_phase 2(measured)
I_phase 3 = I_phase 2(measured) * sin(angle of rotation + 120°)

5. rotation angle sector:

I_phase 1 = - I_phase 2(measured) - I_phase 3(measured)
I_phase 2 = I_phase 2(measured)
I_phase 3 = I_phase 3(measured)

6. rotation angle sector:

I_phase 1 = I_phase 3(measured) * sin(angle of rotation)
I_phase 2 = - I_phase 1(measured) - I_phase 3(measured)
I_phase 3 = I_phase 3(measured).

3. Method according to claim 1 or 2, **characterized in that** the semiconductor power control means are implemented in silicon technology.

4. Method according to claim 1 or 2, **characterized in that** the semiconductor power control means are implemented in silicon carbide technology.

5. Method according to claim 1 or 2, **characterized in that** the semiconductor power control means are implemented in GaN technology.

6. Method according to one of the preceding claims, **characterized in that** a household device with a three-phase motor is operated with controlling the three-phase motor, wherein preferably the household device is a washing machine or a dryer.

7. Device for driving a three-phase motor with three-phase current, **characterized by**:

- a power supply has semiconductor power control means being arranged in half-bridge configuration with semiconductor power control means, wherein the semiconductor power control means are implemented in silicon technology, in silicon carbide technology or in GaN technology,
- a motor control being connected to the power supply, wherein the motor control is designed to drive the three-phase motor with a method according to one of the preceding claims.

8. Device according to claim 7, **characterized in that** the device is designed to be without shunt resistors für detecting a current flowing through the three-phase motor.

9. Device according to claim 7 or 8, **characterized in that** the power supply is designed to be a three-phase inverter.

10. Device according to one of the claims 7 to 9, **characterized in that** the three-phase motor is a BLDC motor.

J

1

0,5

0

-0,5

-1

t

———— Series 2  — — — — Series 3  ····· Series 4   **Fig.1**

J

1,2

1

0,8

0,6

0,4

0,2

0

t

——Series2  — — —Series3  ····· Series4

**Fig.2**

**Fig.3**

**Fig.4**

Fig.5

Fig.6

Fig.7

Fig.8

Fig.9

Fig.10

**Fig.11**

Europäisches
Patentamt

European
Patent Office

Office européen
des brevets

# EUROPEAN SEARCH REPORT

**Application Number**

EP 23 38 2608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/172983 A1 (COSTANZO DINO [IT] ET AL) 10 June 2021 (2021-06-10) | 1,2,7-9 | INV.<br>H02P6/18 |
| Y | * paragraph [0052] – paragraph [0105]; figures 1,2,3A-3F * | 3-6,10 | H02M1/00 |
| Y | US 2022/321045 A1 (HOFMANN TOBIAS [DE] ET AL) 6 October 2022 (2022-10-06) | 10 | |
| A | * paragraph [0030] *<br>* paragraph [0027] * | 1,7 | |
| Y | US 2022/334155 A1 (KRUG MICHAEL [DE] ET AL) 20 October 2022 (2022-10-20)<br>* paragraph [0024] * | 3-5 | |
| Y | US 6 316 895 B1 (RAMARATHNAM RAMACHANDRAN [IN]) 13 November 2001 (2001-11-13)<br>* figure 12 * | 6 | |
| A | US 2022/149766 A1 (PARK JAE SANG [KR]) 12 May 2022 (2022-05-12)<br>* paragraph [0035] * | 1,7 | |

**TECHNICAL FIELDS SEARCHED (IPC)**

H02P
H02M

The present search report has been drawn up for all claims

| Place of search | Date of completion of the search | Examiner |
|---|---|---|
| Munich | 15 November 2023 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 38 2608**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-11-2023**

| Patent document cited in search report | Publication date | Patent family member(s) | Publication date |
|---|---|---|---|
| US 2021172983 A1 | 10-06-2021 | CN 112953347 A<br>US 2021172983 A1<br>US 2022214384 A1 | 11-06-2021<br>10-06-2021<br>07-07-2022 |
| US 2022321045 A1 | 06-10-2022 | CN 114175493 A<br>DE 102019211975 A1<br>EP 4010977 A1<br>JP 2022543448 A<br>US 2022321045 A1<br>WO 2021028166 A1 | 11-03-2022<br>11-02-2021<br>15-06-2022<br>12-10-2022<br>06-10-2022<br>18-02-2021 |
| US 2022334155 A1 | 20-10-2022 | CN 115219761 A<br>DE 102022108873 A1<br>US 2022334155 A1 | 21-10-2022<br>20-10-2022<br>20-10-2022 |
| US 6316895 B1 | 13-11-2001 | AT E268072 T1<br>DE 69917630 T2<br>EP 1081842 A1<br>ES 2222667 T3<br>US 6316895 B1 | 15-06-2004<br>23-06-2005<br>07-03-2001<br>01-02-2005<br>13-11-2001 |
| US 2022149766 A1 | 12-05-2022 | CN 114553105 A<br>DE 102021212704 A1<br>KR 20220064050 A<br>US 2022149766 A1 | 27-05-2022<br>12-05-2022<br>18-05-2022<br>12-05-2022 |

EPO FORM P0459

For more details about this annex : see Official Journal of the European Patent Office, No. 12/82